(19) Europäisches Patentamt
European Patent Office
Office européen des brevets

(11) **EP 4 083 970 A1**

(12) **EUROPEAN PATENT APPLICATION**
published in accordance with Art. 153(4) EPC

(43) Date of publication:
**02.11.2022 Bulletin 2022/44**

(21) Application number: **20906512.7**

(22) Date of filing: **16.07.2020**

(51) International Patent Classification (IPC):
*G09B 9/00* (2006.01)    *F17D 5/06* (2006.01)
*G01M 3/24* (2006.01)    *G01N 29/07* (2006.01)

(52) Cooperative Patent Classification (CPC):
**F17D 5/06; G01M 3/24; G01N 29/07; G09B 9/00**

(86) International application number:
**PCT/BR2020/050266**

(87) International publication number:
**WO 2021/127754 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.12.2019 BR 102019028026**

(71) Applicants:
• **Companhia de Saneamento Básico do Estado
De São Paulo - SABESP
05429-900 São Paulo (BR)**

• **Universidade Estadual Paulista
Julio de Mesquita Filho
01049010 São Paulo (BR)**

(72) Inventors:
• **BRENNAN, Michael
15385-000 Ilha Solteira (BR)**
• **LOBATO DE ALMEIDA, Fabrício
17602-496 Tupã (BR)**
• **IWANAGA, Maurício
15385-000 Ilha Solteira (BR)**
• **SCUSSEL, Oscar
15385-000 Ilha Solteira (BR)**

(74) Representative: **Clarke Modet & Co.
C/ Suero de Quiñones 34-36
28002 Madrid (ES)**

(54) **METHOD AND SIMULATION BENCH FOR LEAKAGE SIGNALS IN LINES**

(57)    The present invention describes a method and bench for simulating leak signals in a pipe, making it possible to test equipment for leak detection. More specifically, the present invention presents a simulator that performs the reproduction, by means of an electromechanical transducer, of the leak signal, where said leak signal is emitted by means of a processor. The present invention also presents a means of attenuating the dynamics of the present system, aiming at making the leak signal reproduced by the electromechanical transducer as faithful as possible to that generated in the field, in an actual leak. The present invention pertains to the fields of electrical engineering, leak detection, sanitation, water distribution and pipeline maintenance.

Figure 1

**Description**

**Field of the Invention**

The present invention presents a method and bench for simulating leak signals in a pipe, which makes it possible to test equipment for leak detection. The present invention pertains to the fields of electrical engineering, leak detection, sanitation, water distribution and pipeline maintenance.

**Backgrounds of the Invention**

The increase in the number of inhabitants in large centers and the decrease in natural reservoirs of potable water make water distribution companies suffer certain pressure to avoid wastage in its transport. In 2014, 36.7% of water was wasted from treatment to the final consumer in Brazil. In 2016, 19.8% of water was wasted due to leaks in networks and branches of water pipes in São Paulo. To overcome this problem, leak detection and location techniques are widely used in policies to reduce actual water losses. One of the most widespread techniques worldwide is the cross-correlation of signals, which consists of the arrangement of at least two sensors spaced at a known distance from each other, where the time delay between the leak signals captured by the two sensors is determined, in which the cross-correlation function between the signals is applied, making it possible to identify the presence of the leak.

Said technique of cross-correlation has been used for years for the detection of leaks in buried metallic pipes applied in water distribution systems. However, this technique is affected when used in plastic tubes due to the high attenuation of the vibro-acoustic signal of the leak. The main reasons for such failures are erroneous estimates of the delay between the measured signals, the velocity at which the vibro-acoustic (noise) signal from the leak propagates, operator inexperience or malfunction of leak noise correlators.

However, the most problematic issue is about the malfunction of leak noise correlators. In many cases, the set of correlators plus the sensors used is too expensive and, in addition, manufacturers are located in a small number of countries, which, in a way, encourages the importation of these devices. Currently, to properly test these noise correlators, it is necessary to move these so-called correlators to a specific test field, resulting in a long period of time from import to actual use. In addition, there is the factor that the climatic conditions of the environment and soil of the countries are different, which implies that the noise correlator does not operate with the same reliability in all environments, generating a huge expense in the purchase of new noise correlators to select the most suitable for the desired detection.

As much as there may be some simulators currently for carrying out tests of the correlators, there are several drawbacks in using the same, wherein one of the causes is the wrong estimation of the velocity that the vibro-acoustic signal of the leak propagates, where this problem it is caused by the dynamics of the used system, where the intrinsic properties of the system interfere in the assessment of the propagation velocity. The biggest problem resulting from this interference is that the location of the leak is not precisely determined, causing, for example, the choice of a wrong correlator and implying in excavation of a place where there is no leak and consequently waste of time and energy for the operator.

In the search for the state of the art in scientific and patent literature, the following documents were found that address the subject:

Document WO2014050921 discloses a device and method for generating leaking sound, where the device has a storage unit that records leaking sound data for simulation that mimics the leaking sound, an oscillation unit that delivers a vibration to the pipeline, a vibration control unit that vibrates the oscillation unit based on leaking sound data for simulation, an adhesion unit to couple the oscillation unit to the pipeline, a sound collection unit that is installed in the pipeline, and a correction unit that corrects the leaking sound generated for simulation based on the sound collected by the sound collector unit. However, the solution proposed by WO2014050921 consists of an actuator that simulates the leak signal directly in a tube, that is, there is a need to have a tube (physical structure) to perform the simulation. This type of configuration makes it impossible to use the device on a laboratory scale and, mainly, makes device portability difficult, requiring a place prepared for its operation.

Document US6453247 discloses a system for detecting by means of a computer program a leakage in water transmission and distribution pipes, wherein by means of sound processing or induced vibration in pipes caused by the escape of water under pressure, where the acoustic leak signals are measured at two or more points of contact with the pipe, the signals are digitally recorded using the computer audio card. There are also disclosed computers equipped with software and multimedia to record, process and reproduce leak signals collected in field analysis and also the use of a frequency range of recorded leak signals to suppress interference noise by applying digital low-pass and high-pass filters at user-specified frequencies. However, document US6453247 does not consider the dynamics of the system in the reproduction of leak signals, which leads to the inaccuracy of the reproduction performed and non-compliance with the originally acquired signal.

Document US2018252611 discloses a method and apparatus for analyzing records in leak detection, wherein the apparatus includes a leak detection sensor for recording a plurality of records and also includes a memory and a transceiver for transmitting the data to another device. However, document US2018252611 is not capable of simulating the leak signals considering any environment, which, in this way, impacts the accuracy of the leak signal, because, when using it in different environments, there can occur a divergence between the reproduced signal and the originally acquired signal because of the different properties of the soil.

Document RU2678712 discloses a test bench to study the fluid flow in a pipe line, in which said bench allows simulating various technological operations and phenomena that occur during operation in the main pipe line, such as, for example, simulation of liquid leakage in pipe lines and the possibility of exploring methods to detect them. It is also disclosed that for the leakage simulations, there are used a pump with the possibility of capacity regulation, a receiving and consumption tank for a fluid model, a piping with leakage simulation sections connected in series with a mass flow meter, pressure sensor, control valve, flow regulator and a three-way valve. However, that document does not present a solution capable of simulating leak signals and does not consider the dynamics of the system.

Thus, from what can be seen from the researched literature, there have not been found documents anticipating or suggesting the teachings of the present invention, in such a way that the solution proposed here has novelty and inventive step compared to the state of the art.

Accordingly, although there are simulators, it is possible to observe that the state of the art lacks a solution that allows a simulation of leak signals in different environments, with the reproduction of the most faithful leak signals possible, avoiding the need to perform tests in specific fixed fields, which allows the training of operators for the correct use of noise correlators and that considers the dynamics of the system in the simulation of said leak signals, avoiding erroneous measurements that can impact the detection and location of leaks, where inaccuracy of locating the leak can result, for example, in an operator wasting time and energy when excavating a leak-free site.

### Summary of the Invention

In this way, the present invention solves the problems of the state of the art from a bench for simulating leak signals in pipes that sends a leak signal through at least one processor, in which said processor directs the signal of leakage to at least one electromechanical transducer from a signal directing means, the electromechanical transducer reproduces the leak signal by vibrations, and a vibration sensor measures the emitted vibration and sends the assessed measurement to the processor. At least one system dynamics filtering tool is then used, thus adapting the leak signal and leaving it as faithful as possible to the signal sent by the processor, which can be a measurement made in the field or a signal created artificially in the processor itself.

In a first object, the present invention presents a bench for simulating leak signals in pipe that comprises: at least one electromechanical transducer; at least one vibration sensor; at least one processor; wherein the vibration sensor is associated with the electromechanical transducer; the processor directs the simulated leak signal to the electromechanical transducer from a signal directing means; the processor receives the measurement signal originally generated by the vibration sensor; and the processor comprises at least one system dynamics filtering tool.

In a second object, the present invention presents a method of simulating leak signals in a pipe that comprises the steps of: simulator characterization and automatic calibration by a processor; sending, by the processor, a previously stored leak signal to at least one electromechanical transducer; measuring, by a vibration sensor, signals reproduced by the electromechanical transducer and sending the measurement signals, assessed by said vibration sensor, to the processor; displaying the measurement signal by the processor; wherein the sending, by the processor, of a leak signal comprises a dynamics filtering step, by the processor, from the characterization of the simulator.

These and other objects of the invention will be immediately appreciated by those skilled in the art and will be described in detail below.

### Brief Description of Figures

The following figures are presented:

Figure 1 shows an embodiment of the arrangement of the leak noise signal simulator proposed by the present invention, where the processor (11), the amplifier (14), electromechanical transducers (9) and vibration sensors (10) are illustrated.
Figure 2 shows the embodiment of one of the possible arrangements of the leak noise signal simulator, in which the processor (11), a directing means (12), a signal amplifier (14), a pair of electromechanical transducers (9), a pair of vibration sensors (10) and a pair of signal conditioners (13) are illustrated.
Figure 3 shows the embodiment of one of the possible arrangements of the leak noise signal simulator, where electromechanical transducers (9), which in one embodiment are electromechanical actuators, a signal amplifier (14), a processor (11), which in one embodiment is a computer for signal generation, and a data acquisition system (15) are illustrated.

Figure 4 shows an embodiment of the flowchart for simulating leakage noise signals in two systems without compensators.

Figure 5 shows an embodiment of the leak signal acquisition system, where the arrangement of sensors along a tube and a valve simulating leakage are illustrated.

Figure 6 shows an exemplification of a graph comparing the signal measured in the field and the signal generated without a compensator, where the graph presents a cross-correlation coefficient (0.3 to -0.3) per delay (-0.04 to 0.02 seconds).

Figure 7 shows an exemplification of a graph comparing the signal measured in the field and the signal generated with a compensator, where the graph presents a cross-correlation coefficient (0.3 to -0.3) per delay (-0.04 to 0.02 seconds).

Figure 8 shows an exemplification of a graph comparing the signal synthesized in the processor (11) with a compensator, where the graph presents a cross-correlation coefficient (-1 to 1) by delay (-20 to 120 ms).

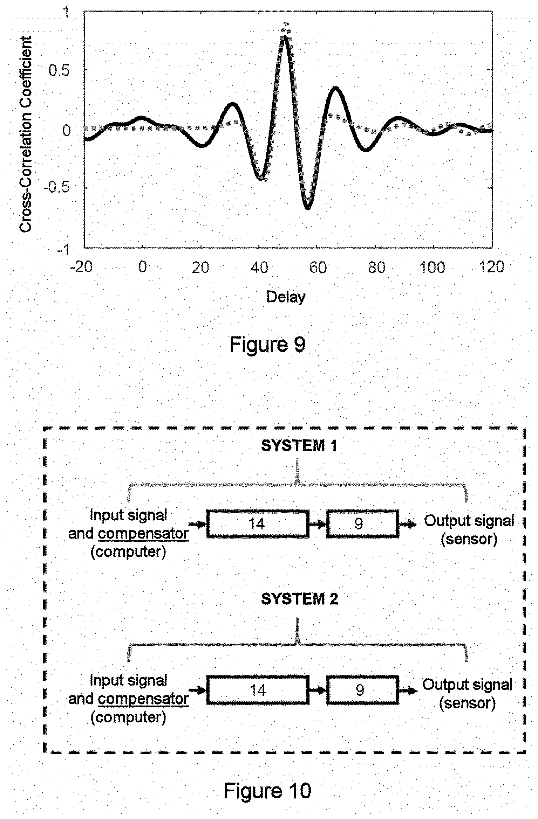

[0026] Figure 9 shows an exemplification of a graph comparing the signal synthesized in the processor (11) without a compensator, where the graph presents a cross-correlation coefficient (-1 to 1) per delay (-20 to 120 ms).

Figure 10 shows an embodiment of the operating flowchart for simulating leakage noise signals in two systems with compensators.

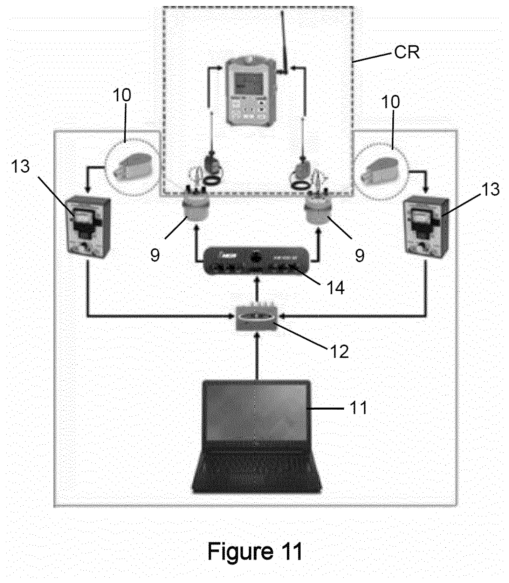

Figure 11 shows an embodiment of a test diagram related to the detection of malfunction in a commercial signal correlator (leak noise correlator) and/or operator training.

## Detailed Description of the Invention

The descriptions that follow are presented by way of example and do not limit the scope of the invention and will make the object of this patent application more clearly understood.

One of the types of leak detection in pipes used is the acoustic detection by noise correlators. These correlators have sensors that perform noise measurements simultaneously at several points in a network. Conventionally, this technique uses cross-correlation to calculate the delay between two sensors connected to the pipe, where this delay, together with the propagation velocity with which the fluid propagates in the pipe, is used to estimate the location of the leak in relation to one of the sensors (distance from the leak to a sensor). The delay is estimated using the peak of the cross-correlation. Some of the problems associated with these correlators are related to the quality of the measurement, the operator's inexperience and the veracity of the measurement performed, where the noise correlators sensors may have defects and acquire data that are not consistent with the present reality.

In a first object, the present invention presents a bench for simulating leak signals in a pipe that comprises: at least one electromechanical transducer (9); at least one vibration sensor (10); at least one processor (11); wherein the vibration sensor (10) is associated with the electromechanical transducer (9); the processor (11) directs the simulated leak signal to the electromechanical transducer (9) from a signal directing means (12); the processor (11) receives the measurement signal originally generated by the vibration sensor (10); and the processor (11) comprises at least one system dynamics filtering tool.

The leak signal is previously acquired and stored in a place accessible by the processor (11), where, in an exemplification, this leak signal can be acquired in field experiments carried out in pipes under specific conditions and with the occurrence of a leak or even synthesized by the processor itself (11). In one embodiment, said leak signal is an actual signal obtained in the field. In one embodiment, a leak signal is the acoustic signal generated by a leaking pipeline. In another embodiment, a leak signal is the acoustic signal generated by a leaking plastic pipe. In another embodiment, a plurality of leak signals from tubes in various soils is acquired. In one embodiment, the leak signal is generated by the processor (11) itself, from a synthesis. Generally, in field tests, the properties of the soil and environment in which the leaking pipeline is involved influence the propagation of the leak signal. In one embodiment, the signal is stored on a computer hard drive. In another embodiment, the signal is stored in a database. In another embodiment, the signal is stored in cloud storage.

The processor (11) then sends the leak signal to a signal directing means (12), such that the signal is then sent to the electromechanical transducer (9), where said electromechanical transducer (9) reproduces the leak signal. In one embodiment, the electromechanical transducer (9) is an electromechanical actuator. In another embodiment, the electromechanical transducer (9) is a loudspeaker box.

In one embodiment, the processor (11) is taken as a signal generator and acquisition system, by means of the inclusion of the signal directing means (12).

From the reproduction of the leak signal, the vibration sensor (10) measures the reproduced leak signal, in such a way that the processor (11) receives the measurement signals originally generated by said vibration sensor (10). The measurement signal originally generated by said vibration sensor (10) can be pre-processed before being received by the processor (11), for example, being converted to another physical quantity, being filtered, being conditioned, etc.

In one embodiment, the vibration sensor (10) sends the signal to the signal directing means (12), and said directing means (12) sends it to the processor (11). In one embodiment, the vibration sensor (10) is an accelerometer. In another embodiment, the vibration sensor (10) is a microphone. In another embodiment, the vibration sensor (10) is a geophone. In another embodiment, the vibration sensor (10) is a laser sensor. Acccordingly, the vibration sensor (10) comprises any sensor capable of measuring a physical quantity that is associated with the vibration generated by the electromechanical transducers (9).

For the purposes of the present invention, the dynamics of the system refers to the intrinsic properties of the system, where these properties cause interference in the signals that are generated / trafficked / measured by the system, in such a way that it influences the veracity of the measurements obtained. Further, the dynamics may depend on the construction of the system, where the variation of a property affects the system as a whole, influencing the measured and/or reproduced signal. For purposes of exemplification within the scope of the present invention, the system, which aims at attenuating the dynamics, refers to any element or component that can be arranged in the leak signal simulation bench, with the exception of the processor (11) and the directing means (12) proposed by the present invention such as, for example, the electromechanical transducer (9), the vibration sensor (10), etc., also not limited thereto.

Considering this limitation verified in the state of the art regarding the dynamics of the system, the present invention proposes to perform an attenuation of said dynamics by means of a system dynamics filtering tool implemented in the processor (11), in order to leave the reproduced signal more faithful to the signal captured in the field, that is, the actual signal measured. In one embodiment, a computer provided with a processor (11) is used for the described implementation. In another embodiment, a system dynamics filtering tool is a computer software developed previously from a mathematical tool. In another embodiment, the system dynamics filtering is performed by means of an algorithm. In one embodiment, the system dynamics filtering tool is a mathematical tool previously configured to operate as a filter capable of attenuating unwanted components.

The system dynamics filtering tool comprises automatic calibration from the characterization of the system. The characterization of the system, for the purposes of the present invention, refers to a verification of the identity and behavior of the system, using known mathematical tools to assess this behavior. In one embodiment, the characterization of the system is performed by means of an impulse response (IR). In another embodiment, the characterization of the system is performed by means of a frequency response (FRF). Thus, based on that, the processor (11) is able to verify the behavior of the system and perform an adequate filtering, from the system dynamics filtering tool, to obtain a greater fidelity of the reproduced signal.

In one embodiment, the automatic calibration is performed considering the estimation of the impulse response of the system and then, using digital filters, a signal is sent by means of the signal directing means (12) to calibrate the system. In another embodiment, the compensator developed herein is an inverted filter to attenuate system dynamics. In one embodiment, compensators are software used by the processor (11) to filter the dynamics of electromechanical transducers (9).

In this way, the system dynamics filtering tool comprises compensators responsible for attenuating the system dynamics by filtering the leak signal. For the purposes of the present invention, the compensators are not used to compensate for any effect of the processor (11) or of the signal directing means (12) because these said components have no relevant influence on the performance of the system of the present invention.

In one embodiment, the simulation system additionally comprises at least one signal conditioner (13) associated with the vibration sensor (10) and the signal directing means (12). Said signal conditioner (13) is used for accelerometers that are of the ICP (Integrated Circuit Piezoelectric) type. These sensors "generate" a voltage signal proportional to the acceleration and need conditioning for the signals to be amplified and measured. However, any sensor with the necessary characteristics to read the signal can be used. The ICP type is used due to its size, sensitivity and linear frequency band (work) compatible with the simulator. In one embodiment, the simulation system comprises two signal conditioners (13) associated with two vibration sensors (2) and a signal directing means (12).

For the purposes of the present invention, the signal directing means (12) is any element capable of directing the signal inserted at its input to the elements coupled to its output. As an example, the signal directing means (12) can be a wire array, a signal splitter, a hub, a signal distributor, a repeater, an RF circuit, an audio card, etc. In one embodiment, the signal directing means (12) is an audio card. In one embodiment, the audio card has two inputs and two outputs. In another embodiment, the audio card has four inputs and four outputs.

The system also comprises a signal amplifier (14) that is associated with the electromechanical transducer (9) and the signal directing means (12). The leak signal generated by the processor (11) is amplified by the signal amplifier (14), so that it can be better reproduced by the electromechanical transducers (9). In one embodiment, the signal directing means (12) transmits the leak signal to a signal amplifier (14), and said signal amplifier (14) amplifies the leak signal. In one embodiment, a signal amplifier (14) is associated with two electromechanical transducers (9) and said electromechanical transducers (9) are independently associated in the signal directing means (12).

In a second object, the present invention presents a method of simulating leak signals in a pipe that comprises the steps of: simulator characterization and automatic calibration by a processor (11); sending, by the processor (11), a previously stored leak signal to at least one electromechanical transducer (9); measuring, by a vibration sensor (10), signals reproduced by the electromechanical transducer (9) and sending the measurement signals originally generated by said vibration sensor (10), to the processor (11); displaying the measurement signal by the processor (11); wherein, sending the leak signal by the processor (11) comprises a dynamics filtering step, by the processor (11), from the characterization of the simulator.

In one embodiment, to simulate leak noise, leak data acquired in the field or synthesized leak noise signals are used on the bench, by means of the software stored in the processor (11). For the purposes of the present invention, synthesized leak noise signals are signals that are created directly in the processor (11), without the need for field measurements, wherein from a software, a user is able to virtually create the leak signals, reporting only some characteristics such as tube and soil properties, leakage distances from the sensors, etc.

In one embodiment, the processor (11) comprises access to a storage location with a plurality of actual leak data. In another embodiment, actual leak data is acquired in various practical situations such as different soil properties, tube properties or tube geometry. In addition, for the simulation, a user is apt to select these different properties to simulate the leak signal, being able to choose according to the need.

The characterization step comprises determining the behavior of the system from the injection of a known signal, making it possible to obtain a mathematical estimate of the behavior of the system. In one embodiment, the processor (11) uses impulse response techniques. In another embodiment, the processor (11) uses the frequency response technique. The characterization of the behavior makes it possible to assess the dynamics of the system in which the simulation is performed, where this dynamics can change based on the intrinsic and constructive properties of the system. Based on this, the processor (11) performs an automatic calibration action, which comprises the digital filtering of the system dynamics effects, identified in the characterization step. In one embodiment, the processor (11) performs digital filtering of the system dynamics upon receipt of the measurement signal originally generated by the vibration sensor (10).

The processor (11) comprises a dynamic filtering step, where the leak signal, before being sent for reproduction, is filtered by a digital filter by means of a compensator.

Given the calibration and dynamic filtering, the processor (11) sends the leak signal to be reproduced by the electromechanical transducer (9). In one embodiment, two electromechanical transducers (9) are arranged to simulate an actual leak detection condition, such that the processor sends data to both electromechanical transducers (9) from a signal directing means (12). The signals reproduced by the transducers (9) include the time delays which the leak signal takes to reach the sensors, in the case of an actual measurement.

With this, the signal reproduced by the electromechanical transducers (9) is measured by the vibration sensor (10), where the vibration sensor (10) receives the acoustic signal, performs measurement and transforms it into an electrical signal to be received by the processor (11). Furthermore, the signal measured by the vibration sensor (10) may be pre-processed before being received by the processor (11). In one embodiment, the signal coming from the vibration sensor (10) is passed through a tool to match the measured signal with the readability of the processor (11).

In the measurement, the signal that arrives at the processor (11) is treated in order to attenuate the dynamics of the system, where the processor (11) performs a step of attenuation of the dynamics effects from a filtering tool, based on the previously performed characterization of the system. For this, in one embodiment, a digital filter is used in order to assign a delay to compensate for a possible advance of the signals stored in the processor (11), and/or compensate for system dynamics effects.

In one embodiment, a step is additionally performed to assess the veracity of the signals measured by the vibration sensor (10), by means of a comparison with the signals reproduced by the electromechanical transducer (9). For this, the processor (11) compares the signal received by the measurement from the vibration sensor (10) with the leak signal emitted by the processor (11), which can be either a field-measured leak noise signal or a synthesized signal of a leak noise. Thus, if the signals generated by the processor (11) and measured by the noise correlator are not similar, it is assessed that the noise correlator is not suitable for such an application. Additionally, in this step, if the signals generated by the processor (11) are not similar to the signals measured by the correlator (assuming that the correlator has already been tested previously and is ready for the application), it is assessed that the operator is not yet trained enough to use the equipment.

In one embodiment, the pipe leak signal simulation system operates in such a way that the processor (11) directs the leak signal to at least one signal amplifier (14), wherein said signal amplifier (14) amplifies the sent signal and sends the same to at least one electromechanical transducer (9), where this electromechanical transducer (9) reproduces the leak signal by vibrations and a vibration sensor (10) measures the emitted vibration and sends the assessed measurement to the processor (11). The present invention also solves the problems with the use of at least one system dynamics filtering tool, thus adapting the leak signal when performing automatic calibration and allows the simulated leak signal to be faithful to the signal measured in field.

In this regard, the concept of the invention described in the present patent application can be used in different practical applications in the current technical scenario, being applicable for testing noise correlators or for testing the skills/capacities of an operator. Correlator test: Assuming that an operator is already trained to use the simulator and the correlator, when verifying that the signals generated by the processor (11) are not similar/equal to the signals measured by the correlator, it is concluded that the correlator is not suitable for the application; Operator test: Assuming that the correlator has already been tested and certified previously and is suitable for application, when it is verified that the signals generated by the processor (11) are not similar/equal to the signals measured by the correlator, it is concluded that the operator does not have sufficient training to use the equipment.

**Example - Laboratory test of noise correlators using a leak signal simulator**

The examples shown here are intended only to exemplify one of the numerous ways to carry out the invention, although without limiting its scope.

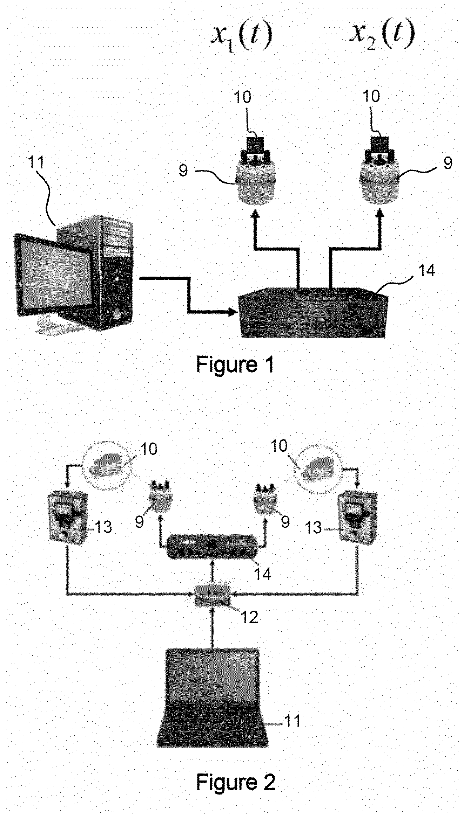

The present invention can be implemented in several ways, in such a way that the system assembly setup can be performed using any technology that is compatible with the concept presented herein. Thus, as can be seen in Figure 1, the system is formed by a processor (11), an amplifier (14), a pair of electromechanical transducers (9) and a pair of vibration sensors (10) associated with each of the actuators, wherein this association can be physical, that is, they are structurally positioned one on top of the other, or a virtual association, that is, it is enough that the sensor (10) is able to detect the signals reproduced by the actuator (9).

The system has two actuators (9), each reproducing a signal, as can be seen in figure 1, with the signals $x_1(t)$ and $x_2(t)$, where each signal represents the propagation of noise from leakage to each of the sensors in the actual field measurement.

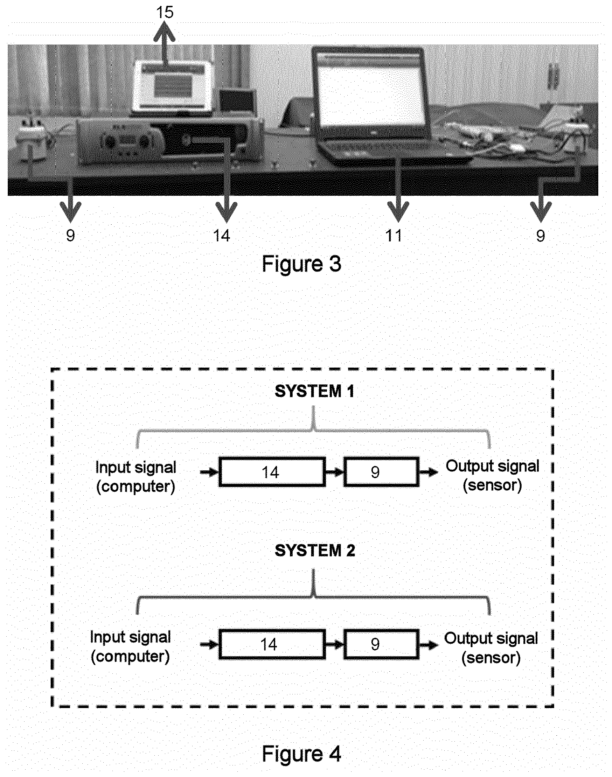

For another way of proposing the system, there are used a computer (11), an audio card (12), a signal amplifier (14), two electromechanical transducers (9), two accelerometers (10) and two signal conditioners (13), as illustrated in figure 2 and figure 3. In addition, the processor used in the system illustrated in figure 3 is used solely to send the (field measured or synthesized) leak signals to the electromechanical transducers (9), and the acquisition system is responsible for recording the data measured by the accelerometers (10), which are later sent to the processor. In this way, to simplify and make the simulator cheaper, the system in figure 2 takes the processor as a signal generator and acquisition system, through the inclusion of the signal directing means (12), wherein, by means of this approach, the data acquisition system (15) has been removed from the simulator configuration.

In the computer (11), leak signals were previously stored, where these leak signals were acquired in actual field tests. The leak signal was then sent by the computer through the audio card and from the audio card to the signal amplifier (14). After amplifying the signal, the signal amplifier (14) sent the leak signal to the electromechanical actuators as illustrated in figure 4. The electromechanical actuator began to reproduce the vibration of the leak signal and the accelerometers detected the acceleration resulting from the vibration. The accelerometers then sent the measured signal to the audio card inputs, and the audio card returned the signal to the computer. Due to the system dynamics influencing the measurement, the system dynamics filtering software, which was implemented on the computer (11), was used. The system dynamics filtering software performed the following steps:

Calculation of impulse response functions

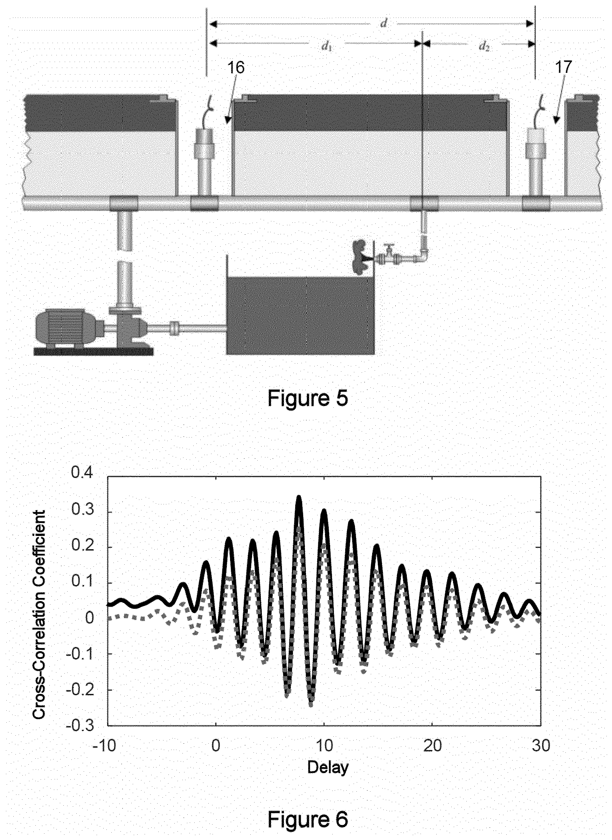

For the characterization of the systems, the impulse response function (IRF) was used and the casuality of the system was avoided, where said casuality was related to the delay of signals, where said delay of signals is the parameter that the correlators of noise estimate in their calculation. The impulse response functions (IRFs) $g^a(t,x)$ between the tube wall acceleration (at a distance $x$ from the leak) and the leak pressure were calculated using the inverse Fourier transform of $G^a(\omega,x)$, for example $g^a(t,x) = F^{-1}\{G^a(\omega,x)\}$, where $F^{-1}\{\}$ is the inverse transformation operator of Fourier. By using the inverse Fourier transform of the frequency response function, the impulse response functions $g^a(t,x)$ between the leak and sensor 1 (16) and between the leak and sensor 2 (17) were calculated considering in sensor 1 (16) $x = d_1$ and in sensor 2 (17) $x = d_2$, where $d_1$ is the distance from sensor 1 (16) to the leak and $d_2$ is the distance from sensor 2 (17) to the leak, as illustrated in figure 5, where the cross-correlation coefficient without the compensator can be seen in figure 6.

System dynamics compensating filters

The compensators were used to compensate for the dynamics of the signal amplifier (14) and electromechanical transducer (9), when they were connected in series. Each electromechanical transducer (9) together with the signal amplifier (14) had an associated time delay because of the finite time it takes for a signal to pass through the system. So, a time delay was added ensuring that the compensator had a time delay rather than a time advance and ensured that the compensated system was causal. To design the compensator, the inverted frequency response (FRF) $\bar{H}_s^a(\omega)$ of the system was calculated as:

$$\overline{H}_s^a(\omega) = 1/H_s^a(\omega) \qquad\qquad (1)$$

where $H_s^a(\omega)$ is the FRF of the system, $\omega$ is the angular frequency, s is the denotation of virtual piping systems 1 and 2 and $\alpha$ is the denotation of acceleration.

The impulse responses (IRFs) $\overline{h}_s^a(t)$ of the compensators (time domain), in which $0 \le t \le T$, were then calculated using the inverse Fourier transform of $\overline{H}_s^a(\omega)$. Then a time delay $\alpha$ was added resulting in the modified IR given by:

$$\begin{cases} \overline{h}_s^a(t) = \overline{h}_s^a(t + \alpha), if\ t \le \alpha \\ \overline{h}_s^a(t) = \overline{h}_s^a(t - \alpha), if\ t > \alpha \end{cases} \qquad\qquad (2)$$

where $\alpha$ = T/2, *t* is the time and T is the time interval.

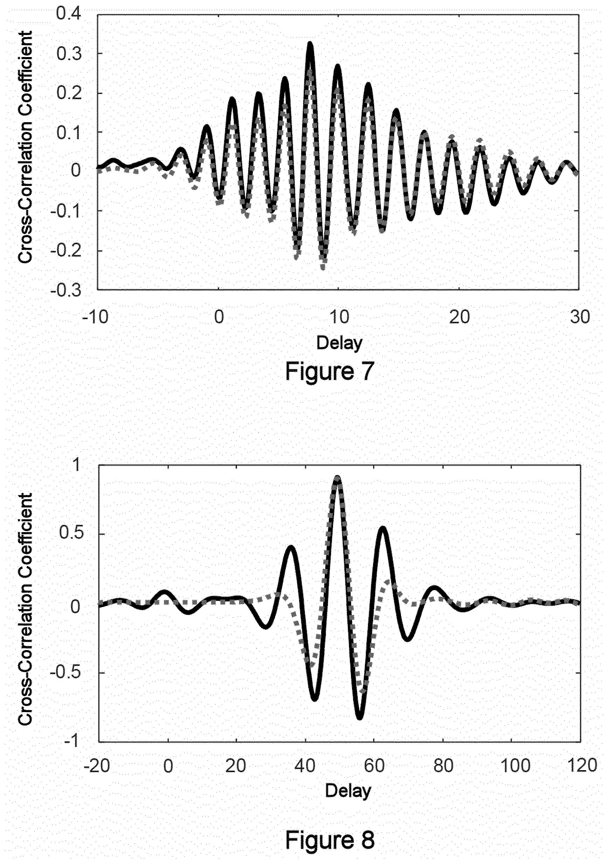

To reduce the computational cost of the compensators, the time interval was reduced and kept only the segments of $\overline{h}_s^a(t)$ that were inside the zones that contained the compensation of the effects of the dynamics of the systems. The IRF $\overline{h}_s^a(t)$ was multiplied by a Hanning window to ensure that the beginning and end of the function were zero. With this modified compensator, it was possible to adequately compensate the system dynamics, without the need to use more complex filters. The leak signal was then compensated, according to the flowchart in figure 10, where the graph of the cross-correlation coefficient was obtained, according to figure 7. After calculating the compensators, the processor (11) filtered the leak signals with these compensators. After being filtered, the signals were sent to the rest of the system, and the electromechanical transducers (9) reproduce the filtered leak signals.

A noise correlator was then used to test its operation and arranged in the system, as illustrated in Figure 11, with the red dashed line representing the commercial noise correlator (CR) of leakage and the solid blue line the simulation system. The computer again sent a leak signal to the audio card input, the audio card sent it to the signal amplifier (14) and, after the amplification, the signals were sent to the actuators. The actuators reproduced the vibration of the received signal and this vibration was captured by the noise correlator sensor. A comparison of the assessed signal and the signal acquired in the field (actual) was then performed.

Soon after, a signal synthesized by the processor (11) was used to test its operation. The computer sent a synthesized leak signal to the audio card input, the audio card sent it to the signal amplifier (14) and, after amplification, the signals were sent to the actuators. The actuators reproduced the vibration of the synthesized signal and this vibration was captured by the noise correlator sensor. Then, the cross-correlation coefficients calculated with compensator (shown in figure 8) and without compensator (shown in figure 9) were verified, where the solid black line represents the signals measured by the electromechanical actuator and the dashed magenta line represents the synthesized signals on the processor (11).

The comparison between the assessed signal and the signal acquired in the field is made by superimposing the cross-correlation (shown in Fig. 7) of the simulated signal with the measured signal (correlator - CR). This can be done by the user or by the software itself of the virtual bench of the present invention. This comparison can also be performed in the frequency domain, where the modulus and phase of the cross-frequency spectrum can also be compared and superimposed. However, in this case, cross-correlation is used due to the ease of obtaining the signal delay between the sensors, which is the main function of a signal correlator. This signal delay has to be equal to the simulated one.

Correlation calculation of assessed signals and field-acquired signals (actual)

The propagation time difference between the leak and the sensors ($\tau_{peak}$) was determined through the peak of the cross-correlation function between $y_1(t)$ and $y_2(t)$. These signals were measured by sensor 1 (16) and sensor 2 (17), as illustrated in figure 5. As $y_1(t)$ and $y_2(t)$ were continuous and stationary with the mean value set to zero, the noise correlation function leakage $R_{y1y2}(\tau)$ was given by:

$$R_{y1y2}(\tau) = E[y_1(t)y_2(t + \tau)] \qquad\qquad (3)$$

where $R_{y1y2}(\tau)$ is the leak noise cross-correlation function, $\tau$ the time delay, $E[]$ is the expectation operator, $y_1(t)$ is the leak noise measured by sensor 1 (16) and $y_2(t)$ is the leakage noise measured by sensor 2 (17).

The function $R_{y1y2}(\tau)$ could only be estimated as a signal because it was measured during a finite time interval. Therefore, as $y_1(t)$ and $y_2(t)$ are measured in a common time interval $0 \le t \le T$, the biased estimator $\hat{R}_{y1y2}(\tau)$ was given by:

$$\hat{R}_{y1y2}(\tau) = \begin{cases} \dfrac{1}{T}\displaystyle\int_0^{T-t} y_1(t)y_2(t+\tau)dt, t > 0 \\[2mm] \dfrac{1}{T}\displaystyle\int_{-t}^{T} y_1(t)y_2(t+\tau)dt, t < 0 \end{cases} \qquad (4)$$

Furthermore, the cross-correlation function in its normalized form, which has a scale from -1 to +1, is called the cross-correlation coefficient ($\rho_{x1x2}(\tau)$) and is commonly expressed as:

$$\rho_{y1y2}(\tau) = \frac{R_{y1y2}(\tau)}{\sqrt{R_{y1y1}(0)R_{y2y2}(0)}} \qquad (5)$$

where $R_{y1y1}(0)$ and $R_{y2y2}(0)$ are values of the auto correlation functions (ACF) $R_{y1y1}(\tau)$ and $R_{y2y2}(\tau)$ at $\tau = 0$.

In this way, the time delay ($\tau_{peak}$) could also be approximately determined by calculating the cross-power phase of spectral density $S_{y1y2}(\omega)$ of the leakage noise, where $\omega$ is the angular frequency given by $\omega = 2\pi f$, and f is the frequency which gives the number of cycles in a period of time. The cross-correlation coefficient $R_{y1y2}(\tau)$ could be determined from the inverse Fourier transform of $S_{y1y2}(\omega)$, so that:

$$R_{y1y2}(\tau) = \frac{1}{2\pi}\int_{-\infty}^{+\infty} S_{y1y2}(\omega)e^{j\omega t}d\omega \qquad (6)$$

where $j = \sqrt{-1}$ and $S_{y1y2}(\omega)) = |S_{y1y2}(\omega)|e^{j\Phi(\omega)}$, where $|S_{y1y2}(\omega)|$ is the modulus of $S_{y1y2}(\omega)$ and $\Phi(\omega)$ is the phase. By having a pure time delay ($\tau_{peak}$) between the two signals, the modulus was a constant and $\Phi(\omega) = -\omega\tau_{peak}$. When using $y_1(t)$ and $y_2(t)$ as white noise with infinite frequency band with a pure time delay ($T_{peak}$), the magnitude and phase of $S_{y1y2}(\omega)$ over the infinite frequency band were given by the constant K and the constant line with slope of $-\omega\tau_{peak}$ respectively. The cross-correlation coefficient $R_{y1y2}(\tau)$ was given by $K\delta(\tau - \tau_{peak})$, where $\delta()$ is the Dirac delta function.

Thus, calculating the inverse Fourier transform of the biased operator $\hat{S}_{y1y2}(\omega)$, the biased cross-correlation coefficient $\hat{R}_{y1y2}(\tau)$ was given by:

$$\hat{R}_{y1y2}(\tau) = \frac{\omega_a K}{\pi} \frac{sen\big(\omega_a(\tau-\tau_{peak})\big)}{\omega_a(\tau-\tau_{peak})} \qquad (7)$$

Accordingly, even though $\hat{R}_{y1y2}(\tau)$ did not result in a pure impulse (Dirac delta function) due to the finite frequency band of signals $y_1(t)$ and $y_2(t)$, it was still possible to approximately estimate the time delay $\tau_{peak}$ through the value of $\tau$ that maximized $\hat{R}_{y1y2}(\tau)$.

As the signal measured by the correlator did not have the delay of simulated signals and distortions were not present in the simulated signal, then its use was discarded (since it was not suitable) for that situation similar to the simulated situation.

Furthermore, the virtual simulator of leaks in buried pipes of the present invention could be used for two different purposes:

Correlator Test: With operator already trained to use the simulator and the correlator, when the signals generated by the processor (11) were not similar to the signals measured by the correlator, it was concluded that the correlator was not suitable for the application; and

Operator test: With the correlator already tested in later steps and verified that it was suitable for application, when the signals generated by the processor (11) were not similar to the signals measured by the correlator, it was concluded that the operator did not have sufficient training to use the equipment.

Those skilled in the art will appreciate the knowledge presented herein and will be able to reproduce the invention in the embodiments presented and in other variants and alternatives, encompassed by the scope of the claims below.

**Claims**

1. A bench for pipe leak signal simulation **characterized in that** it comprises:

   a. at least one electromechanical transducer (9);
   b. at least one vibration sensor (10);
   c. at least one processor (11);

   wherein,

   - the vibration sensor (10) is associated with the electromechanical transducer (9);
   - the processor (11) directs the simulated leak signal to the electromechanical transducer (9), from a signal directing means (12);
   - the processor (11) receives the measurement signal originally generated by the vibration sensor (10); and
   - the processor (11) comprises at least one system dynamics filtering tool.

2. The bench for pipe leak signal simulation according to claim 1, **characterized in that** the system dynamics filtering tool comprises automatic calibration from the characterization of the system.

3. The bench for pipe leak signal simulation according to claim 1, **characterized in that** the signal directing means (12) is an audio card.

4. The bench for pipe leak signal simulation according to claim 1, **characterized in that** it additionally comprises at least one signal conditioner (13) associated with the vibration sensor (10) and the signal directing means (12).

5. The bench for pipe leak signal simulation according to claim 1, **characterized in that** it additionally comprises a signal amplifier (14) associated with the electromechanical transducer (9) and the signal directing means (12).

6. The bench for pipe leak signal simulation according to any one of claims 1 to 5, **characterized in that** it comprises two or more electromechanical transducers (9) and two or more vibration sensors (10).

7. A method for pipe leak signal simulation **characterized in that** it comprises the steps of:

   a. simulator characterization and automatic calibration by a processor (11);
   b. sending, by the processor (11), a previously stored leak signal to at least one electromechanical transducer (9);
   c. measuring, by a vibration sensor (10), signals reproduced by the electromechanical transducer (9) and sending the measurement signals, originally generated by said vibration sensor (10), to the processor (11);
   d. displaying the measurement signal by the processor (11); wherein, the sending, by the processor (11), of a leak signal comprises a dynamics filtering step, by the processor (11), from the characterization of the simulator.

8. The method for pipe leak signal simulation according to claim 7, **characterized in that** it additionally comprises the step of assessing the veracity of the signals measured by the vibration sensor (10) of signals reproduced by the electromechanical transducer (9) by means of a comparison.

9. The method for pipe leak signal simulation according to claim 7, **characterized in that** the dynamic filtering step is implemented by a digital filter by means of a compensator.

Figure 1

Figure 2

Figure 3

Figure 4

Figure 5

Figure 6

Figure 7

Figure 8

Figure 9

Figure 10

Figure 11

## INTERNATIONAL SEARCH REPORT

| International application No. |
|---|
| PCT/BR2020/050266 |

| A. | CLASSIFICATION OF SUBJECT MATTER |
|---|---|

**IPC: G09B9/00 (2006.01), F17D5/06 (2006.01), G01M3/24 (2006.01), G01N29/07 (2006.01)**
**CPC: G09B9/00, F17D5/06, G01M3/243, G01N29/07**

According to International Patent Classification (IPC) or to both national classification and IPC

| B. | FIELDS SEARCHED |
|---|---|

Minimum documentation searched (classification system followed by classification symbols)

**G09B; F17D; G01M; G01N**

Documentation searched other than minimum documentation to the extent that such documents are included in the fields searched

**Base de Dados INPI-BR**

Electronic data base consulted during the international search (name of data base and, where practicable, search terms used)

**EPODOC, ESPACENET, GOOGLE PATENTS**

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2014050921 A1 (NEC CORP [JP]) 03 April 2014 (2014-04-03) (abstract; Figs. 1 – 6; par. [0012] – [0017], [0022] – [0027], [0029] – [0035]) (cited in the application) ------------------------------------------------ | 1 – 9 |
| Y | US 7475596 B2 (CA NAT RESEARCH COUNCIL [CA]) 13 January 2009 (2009-01-13) (abstract; Figs. 1a – 4; col. 1, l. 61 – col. 2, l. 20) ------------------------------------------------ | 1 – 9 |
| Y | US 6453247 B1 (CA NAT RESEARCH COUNCIL [CA]) 17 September 2002 (2002-09-17) (col. 2, l. 12 – col. 4, l. 31; col. 5, l. 22 – 57) (cited in the application) ------------------------------------------------ | 1 – 9 |

| ☐ | Further documents are listed in the continuation of Box C. | ☒ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 September 2020 | 06 October 2020 |

| Name and mailing address of the ISA/ **INPI** INSTITUTO NACIONAL DA PROPRIEDADE INDUSTRIAL Rua Mayrink Veiga nº 9, 6º andar cep: 20090-910, Centro - Rio de Janeiro/RJ | Authorized officer **Fabio Pacheco Freeland** +55 21 3037-3493/3742 |
|---|---|
| Facsimile No. | Telephone No. |

Form PCT/ISA/210 (second sheet) (January 2015)

INTERNATIONAL SEARCH REPORT
Information on Patent Family Members

International application No.

PCT/BR2020/050266

| | | | |
|---|---|---|---|
| WO 2014050921 A1 | 2014-04-03 | NONE | |
| US 7475596 B2 | 2009-01-13 | US 2008078247 A1 | 2008-04-03 |
| | | AU 2006261535 A1 | 2006-12-28 |
| | | CA 2612835 A1 | 2006-12-28 |
| | | EP 1896842 A1 | 2008-03-12 |
| | | JP 2013061350 A | 2013-04-04 |
| | | JP 5687262 B2 | 2015-03-18 |
| | | JP 2015083979 A | 2015-04-30 |
| | | JP 5930427 B2 | 2016-06-08 |
| | | JP 2008544260 A | 2008-12-04 |
| | | NZ 564647 A | 2011-07-29 |
| | | US 2006283251 A1 | 2006-12-21 |
| | | US 7328618 B2 | 2008-02-12 |
| | | WO 2006136013 A1 | 2006-12-28 |
| US 6453247 B1 | 2002-09-17 | AT 308036 T | 2005-11-15 |
| | | AU 2660501 A | 2001-07-24 |
| | | CA 2397174 A1 | 2001-07-19 |
| | | DE 60114366 D1 | 2005-12-01 |
| | | EP 1250578 A2 | 2002-10-23 |
| | | WO 0151904 A2 | 2001-07-19 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014050921 A
- US 6453247 B
- US 2018252611 A
- RU 2678712